# EUROPEAN PATENT APPLICATION

(11) **EP 4 718 811 A1**
(43) Date of publication of application: **01.04.2026**
(21) Application number: 25195432.7
(22) Date of filing: 12.08.2025
(51) Int. Cl.: H04L 47/2408, H04L 47/2416, H04L 47/2425, H04L 47/2441, H04L 47/2475

(54) **APPLICATION STREAM CLASSIFICATION FOR TRAFFIC PRIORITIZATION**

(30) Priority: 26.09.2024 US 202418897939
(71) Applicant: INTEL Corporation, Santa Clara, CA 95054 (US)
(72) Inventor: HOROVITZ, Dan, Rishon Letzion (IL); ALON, Mordechai, Or Yehuda (IL); GUETTA, Kobi, Netanya (IL); KAHANA, Yoni, Kfar Hess (IL)
(74) Representative: Rummler, Felix

(57) **Abstract**

An apparatus, including: a classifier configured to classify, in real time, an application type of an application traffic stream based on one or more indicators received from one or more components of an edge device and associated with the application traffic stream; and a quality-of-service (QoS) engine configured to assign a priority to the application traffic stream by modifying its packet headers, enabling a network module to dynamically prioritize the application traffic stream based on the classification.

## Description

### Technical Field

Aspects described herein generally relate to application stream classification and, more particularly, to application stream classification for network traffic prioritization.

### Background

In the domain of client personal computer networking, efficiently managing bandwidth, latency, and throughput for various applications remains a significant challenge. Existing solutions often rely on predefined profiles based on networking attributes such as the five-tuple (source IP address, source port, destination IP address, destination port, and transport protocol). This approach has inherent limitations, requiring prior knowledge of applications or manual user configuration, which can depend on the user's technical expertise.

As local wireless networks evolve, with improved capabilities to manage Quality of Service (QoS) across multiple clients on a shared wireless local area network (LAN), accurate classification of networking applications is essential for optimizing performance in scenarios like gaming, voice and video calls, and media streaming. However, current technologies struggle to reliably identify applications, resulting in suboptimal resource allocation and a diminished user experience. Solutions that rely on static lists of known applications or manual QoS configuration are inadequate in dynamic environments, as they fail to account for emerging applications and require significant user intervention.

### Brief Description of the Figures

FIG. 1 illustrates a block diagram of a network performance optimizer in accordance with aspects of the disclosure.
FIG. 2 illustrates a table of application data stream prioritization levels in accordance with aspects of the disclosure.
FIG. 3 illustrates a computing device in accordance with aspects of the disclosure.

### Detailed Description

The aspects of the present disclosure aim to overcome the limitations of existing solutions by providing a dynamic, real-time allocation of bandwidth, latency, and throughput for application traffic streams based on automatic, real-time application traffic stream classification.

A network performance optimizer, as disclosed herein, enhances a user's networking experience by providing application traffic stream classification data to a quality-of-service (QoS) engine. This allows a wireless or wireline network module to allocate resources more effectively based on the specific activity being performed by the user. Specifically, a network performance enhancer collects information from various components within an edge device to assess the user's current activity and application usage. This information may include network parameters, graphics usage, audio input/output, and hard drive activity, among others. By analyzing these indicators, the application traffic stream classifier accurately identifies the type of application in use and supplies the QoS engine with the necessary classification information to optimize network connectivity for the user's ongoing activity. The result is more efficient resource allocation, thereby improving the overall user experience.

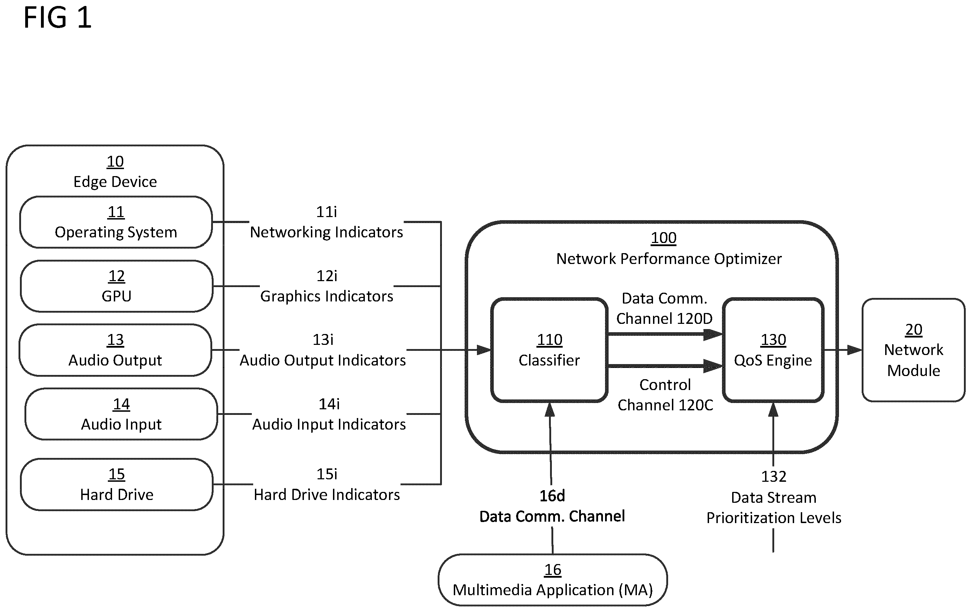

FIG. 1 illustrates a block diagram of a network performance optimizer 100 in accordance with aspects of the disclosure.

The network performance optimizer 100 comprises a classifier 110 and a Quality of Service (QoS) engine 130.

The classifier 110 is configured to classify, in real time, an application type of an application traffic stream based on one or more indicators received from one or more components of an edge device 10 and associated with the application traffic stream to understand the user's current activity and application usage.

Recognizing that different user activities require different network performance parameters, the network performance optimizer 100 gathers user activity indicators to define the appropriate Key Performance Indicators (KPIs) for wireless or wireline connectivity. Of course, there are technical trade-offs involved. However, the network performance optimizer 100 aims to dynamically select the right trade-off based on the user's activity.

Traditional networking parameters have been based on five-tuple Information, that is, source internet protocol (IP) address, source port, destination IP address, destination port, and transport protocol. The indicators from the edge device 10, in accordance with this disclosure, additionally comprise a networking indicator 11i from an operating system 11, a graphics indicator 12i from a graphics processor unit (GPU) 12, an audio output indicator 13i from an audio output device 13, an audio input indicator 14i from an audio input device 14, and/or a hard drive activity indicator 15i from a hard drive 15, and the like.

The networking indicator 11i may be based on factors such as a size of application traffic stream packets, a ratio of upload to download traffic in the application traffic stream, a frequency of application packet transmissions, a time gap between application packet transmissions or receipts, and/or a length of the application packets. For example, larger packet sizes may indicate file transfers or video streaming. Video call applications typically exhibit balanced upload and download traffic, while video streaming is primarily download-heavy. High-frequency packet transmissions may suggest real-time applications such as gaming or video conferencing. Consistent, short intervals between packet transmissions may indicate streaming or real-time communication, whereas longer, irregular intervals may be associated with less time-sensitive activities like web browsing or file downloads.

The graphics indicator 12i is based on the level of graphics processor unit (GPU) usage or the frequency of image changes in the application traffic stream. For instance, intensive GPU usage typically indicates activities such as gaming or video playback. Rapid changes in display content, often seen in video playback or gaming, serve as strong indicators of these activities. Camera usage may indicate activities such as video calls.

The audio output indicator 13i is based on whether the audio output is continuous or intermittent. Continuous or frequent use of the audio output system may signal activities like video or audio streaming.

The audio input indicator 14i is based on whether the audio input is continuous or intermittent. Microphone usage may indicate activities such as audio or video calls, conferencing, or voice commands.

The hard drive activity indicator 15i is based on the volume of data storage activity or a data transfer pattern associated with the application traffic stream. Significant read/write operations on the hard drive may indicate file downloading or uploading activities. Additionally, large continuous data transfers versus small, intermittent write/read operations may provide further insight into the type of application in use.

The aspects of this disclosure may be expanded to incorporate any sensors, whether real or fusion-based. By analyzing their respective indicators, the network performance optimizer 100 can classify user activities to enhance both the user experience and network performance in response to real-time workloads. Leveraging these indicators, the classifier 110 can more precisely identify the type of application in use and supply the QoS engine 130 with information to optimize network connectivity based on the user's current activity. This ensures efficient allocation of network resources, improving the overall user experience.

The classifier 110 is further configured to classify the application type on historical application traffic stream patterns, which may be stored in any memory.

The classifier 110 classifies the application data, and the QoS engine 130 labels the application data packets accordingly. There are two communication channels between the classifier 110 and the QoS engine 130: a data channel 120D, where application data stream packets 16D from the multimedia application (MA) 16 flow through the classifier 110, QoS engine 130, and network module 20; and a control channel 120C, which provides control information, including packet classification. The QoS engine 130 labels the packets based on their classification and prioritization level to ensure correct prioritization is applied.

Based on the classification from the classifier 110, the QoS engine 130 configures the network module 20 to optimize for throughput, latency, and QoS. It applies the appropriate profile (e.g., gaming, streaming, download ...) and key performance indicators (KPIs), such as high throughput, low latency, and/or high bandwidth, enhancing the user's experience according to their real-time activity. The QoS engine 130 is configured to assign a priority to the application traffic stream by modifying its packet headers, enabling a network module to dynamically prioritize the application traffic stream based on the classification.

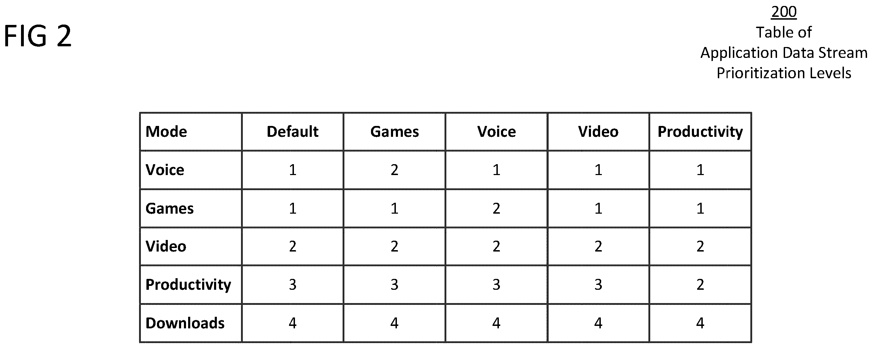

FIG. 2 illustrates table 200 of application data stream prioritization levels in accordance with aspects of the disclosure.

The QoS engine 130 is further configured to receive a set of data stream prioritization levels 132 that determine a prioritization of different application types; and assign a priority to the application traffic stream additionally based on the set of data stream prioritization levels 132. The application types may comprise gaming, video streaming, audio streaming, downloading, audio conferencing, video conferencing, artificial intelligence chatbot applications, and/or productivity applications.

The prioritization of application data streams may be determined by the user of the edge device 10. For instance, during working hours, the user may prioritize video conferencing and productivity applications over gaming and video streaming, while in the evening, gaming or streaming can take precedence over video conferencing.

Table 200 shows how different data streams are prioritized based on the application type and prioritization level. Each row represents an application type, and each column represents a prioritization level, with the values indicating the priority level. For instance, DSCP values may be assigned as follows: priority 1 -> 0x2e (Voice), priority 2 -> 0x26 (Video), priority 3 -> 0x00 (Best Effort), priority 4 -> 0x08 (Background). The QoS engine 130 then tags the application packet and sends it to the network module 20.

A particular application communicates with an external server. Previously, such applications sent data packets directly to the network module 20 of the operating system. As networks became more congested, a byte in the Internet Protocol (IP) header, known as the Differentiated Services Code Point (DSCP), was introduced to indicate packet priority. Before the network performance optimizer 100, as disclosed herein, the QoS engine 130 used the five-tuple information and the process identification of the sending application to modify the DSCP byte in each packet. Additionally, the QoS engine 130 received user preferences that determined which applications should be prioritized. It used the application's process ID and five-tuple traffic characteristics to modify the DSCP byte, ensuring that the network module 20 applied the correct traffic priority.

Previous systems relied on prior knowledge of the application, assuming each application used only one type of data stream (e.g., video or gaming). In contrast, the network performance optimizer 100, through the classifier 110, is effective even when the application is unknown or uses multiple traffic streams. This enables the QoS engine 130 to identify and manage applications without predefined information. For example, online conferencing involves multiple traffic types, such as video, audio, text chat, and file downloads, all of which were previously treated with predefined properties.

During application use, the network performance optimizer 100 adjusts allocated bandwidth in real time to account for changing usage patterns. For example, in gaming, if the GPU usage is low, it indicates the user may not be actively playing but rather downloading or updating the game. In this case, bandwidth is allocated accordingly. Conversely, heavy GPU usage suggests active gameplay, prompting the network performance optimizer 100 to prioritize bandwidth for that activity. Similarly, in online conferencing, which involves a mix of audio calls, chats, file downloads, and video sharing, the optimizer adjusts bandwidth to meet the specific demands of each activity.

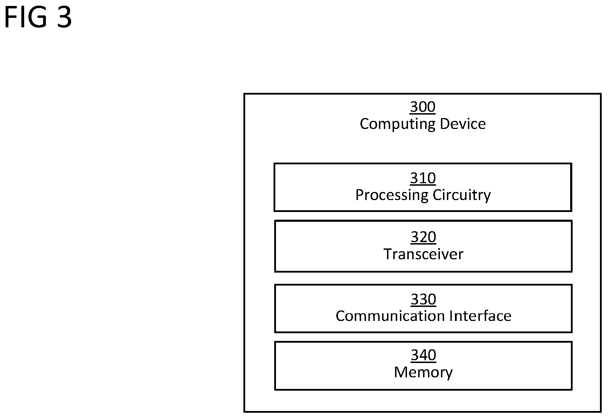

FIG. 3 illustrates a computing device 300 in accordance with aspects of the disclosure.

The computing device 300 may be identified with a central controller and be implemented as any suitable network infrastructure component, which may be implemented as a cloud/edge network server, controller, computing device, etc. The computing device 300 may serve the network performance optimizer 100, classifier 110, and QoS engine 130 in accordance with the various techniques discussed herein. To do so, the computing device 300 may include processor circuitry 310, a transceiver 320, a communication interface 330, and a memory 340. The components that are shown in FIG. 3 are provided for ease of explanation, and the computing device 300 may implement additional, fewer, or alternative components than those shown in FIG. 3.

The processor circuitry 310 may be operable as any suitable number and/or type of computer processor that may function to control the computing device 300. The processor circuitry 310 may be identified with one or more processors (or suitable portions thereof) implemented by the computing device 300. The processor circuitry 310 may be identified with one or more processors such as a host processor, a digital signal processor, one or more microprocessors, graphics processors, baseband processors, microcontrollers, an application-specific integrated circuit (ASIC), a portion (or the entirety of) a field-programmable gate array (FPGA), etc.

In any case, the processor circuitry 310 may be operable to execute instructions to perform arithmetic, logic, and/or input/output (I/O) operations and/or to control the operation of one or more components of the computing device 300 to perform various functions as described herein. The processor circuitry 310 may include one or more microprocessor cores, memory registers, buffers, clocks, etc. It may generate electronic control signals associated with the components of the computing device 300 to control and/or modify the operation of those components. The processor circuitry 310 may communicate with and/or control functions associated with the transceiver 320, the communication interface 330, and/or the memory 340. The processor circuitry 310 may additionally perform various operations to control the communications, communications scheduling, and/or operation of other network infrastructure components communicatively coupled to the computing device 300.

The transceiver 320 may be implemented as any suitable number and/or type of components operable to transmit and/or receive data packets and/or wireless signals in accordance with any suitable number and/or type of communication protocols. The transceiver 320 may include any suitable type of components to facilitate this functionality, including components associated with known transceiver, transmitter, and/or receiver operations, configurations, and implementations. Although shown as a transceiver in FIG. 3, transceiver 320 may include any suitable number of transmitters, receivers, or combinations thereof, which may be integrated into a single transceiver or as multiple transceivers or transceiver modules. The transceiver 320 may include components typically identified with a radio frequency (RF) front end and include, for example, antennas, ports, power amplifiers (PAs), RF filters, mixers, local oscillators (LOs), low noise amplifiers (LNAs), up-converters, down-converters, channel tuners, etc.

The communication interface 330 may be implemented as any suitable number and/or type of components operable to facilitate the transceiver 320 to receive and/or transmit data and/or signals in accordance with one or more communication protocols, as discussed herein. The communication interface 330 may be implemented as any suitable number and/or type of components operable to interface with the transceiver 320, such as analog-to-digital converters (ADCs), digital-to-analog converters, intermediate frequency (IF) amplifiers and/or filters, modulators, demodulators, baseband processors, and the like. The communication interface 330 may thus operate in conjunction with the transceiver 320 and form part of an overall communication circuitry implemented by the computing device 300, which may be implemented via the computing device 300 to transmit commands and/or control signals to perform any of the functions described herein.

The memory 340 is operable to store data and/or instructions such that when the instructions are executed by the processor circuitry 310, they cause the computing device 300 to perform various functions as described herein. The memory 340 may be implemented as any known volatile and/or non-volatile memory, including, for example, read-only memory (ROM), random access memory (RAM), flash memory, a magnetic storage medium, an optical disk, erasable programmable read-only memory (EPROM), programmable read-only memory (PROM), etc. The memory 340 may be non-removable, removable, or a combination of the two. The memory 340 may be implemented as a non-transitory computer-readable medium storing one or more executable instructions such as logic, algorithms, code, etc.

As further discussed below, the instructions, logic, code, etc., stored in the memory 340 are represented by the various modules/engines as shown in FIG. 3. Alternatively, when implemented via hardware, the modules/engines shown in FIG. 3 associated with the memory 340 may include instructions and/or code to facilitate control and/or monitoring of the operation of such hardware components. In other words, the modules/engines shown in FIG. 3 are provided to facilitate an explanation of the functional association between hardware and software components. Thus, the processor circuitry 310 may execute the instructions stored in these respective modules/engines in conjunction with one or more hardware components to perform the various functions discussed herein.

The aspects of the disclosure are applicable to both wireless and wireline communications, including WiFi, LAN (local area network), cellular/mobile (4G, 5G, etc.), ZigBee, and similar technologies. Additionally, while the aspects of this disclosure focus on network traffic optimization, it may also be extended to central processing unit (CPU) optimization, memory optimization, and the like.

The aspects of the disclosure provide network resource management to enhance a user's online experience

The network performance optimizer 100 classifies data streams in real-time and autonomously adjusts network settings based on the specific activity being performed. This approach ensures optimized network performance for various tasks without requiring manual user intervention.

Unlike static configurations, the network performance optimizer 100 dynamically adjusts network parameters based on user activity. By recognizing different types of activities such as gaming, streaming, or downloading, it allocates network resources to optimize latency, throughput, and bandwidth as appropriate for each task.

The network performance optimizer 100 offers a seamless user experience by automatically adjusting network settings based on behavior. This eliminates the need for users to engage with complex network configurations or manually adjust settings for different applications, ensuring better performance across all activities.

Network performance is proactively managed by anticipating user needs in real time. This preemptive approach ensures that network conditions are continuously optimized for the user's current activities.

The network performance optimizer 100 is inclusive of all user activities, regardless of whether an application is known or new. It adapts to real-time user behavior, providing a flexible and future-proof solution that is not limited by a predefined set of applications or protocols.

By accurately classifying streams and prioritizing critical applications, the network performance optimizer 100 enhances QoS. This reduces latency and buffering issues for time-sensitive activities such as video calls or online gaming.

The user experience is simplified by offering a "set-and-forget" level where the network intelligently adapts to the user's needs, removing the burden of manually managing complex network settings.

The network performance optimizer 100 automatically adjusts to the user's online activities, providing a consistently optimized and effortless network experience.

The techniques of this disclosure may also be described in the following examples.

Example 1. An apparatus, comprising: a classifier configured to classify, in real time, an application type of an application traffic stream based on one or more indicators received from one or more components of an edge device and associated with the application traffic stream; and a quality-of-service (QoS) engine configured to assign a priority to the application traffic stream by modifying its packet headers, enabling a network module to dynamically prioritize the application traffic stream based on the classification.

Example 2. The apparatus of example 1, wherein the application types comprise gaming, video streaming, audio streaming, downloading, audio conferencing, video conferencing, artificial intelligence chatbot applications, or productivity applications.

Example 3. The apparatus of any of examples 1-2, wherein the QoS engine is configured to dynamically prioritize the application traffic stream to optimize for latency, throughput, or bandwidth.

Example 4. The apparatus of any of examples 1-3, wherein the indicators comprise a networking indicator, a graphics indicator, an audio output indicator, an audio input indicator, or a hard drive activity indicator.

Example 5. The apparatus of example 4, wherein the networking indicator is based on a size of application traffic stream packets, a ratio of upload to download traffic in the application traffic stream, frequency of the traffic stream packets, time gaps between application traffic stream packet transmissions or receipts, or length of the application traffic stream packets.

Example 6. The apparatus of example 4, wherein the graphics indicator is based on a level of graphics processor unit (GPU) usage or frequency of image changes in the application traffic stream.

Example 7. The apparatus of example 4, wherein the audio output indicator is based on whether an audio input is continuous or intermittent.

Example 8. The apparatus of example 4, wherein the audio input indicator is based on whether an audio output is continuous or intermittent.

Example 9. The apparatus of example 4, wherein the hard drive activity indicator is based on a volume of data storage activity or a data transfer pattern associated with the application traffic stream.

Example 10. The apparatus of any of examples 1-9, wherein the QoS engine is further configured to: receive a set of prioritization levels that determine a prioritization of different application types; and assign a priority to the application traffic stream additionally based on the set of prioritization levels.

Example 11. The apparatus of any of examples 1-12, wherein the classifier is further configured to classify the application type on historical application traffic stream patterns.

Example 12. A component of a system, comprising: processor circuitry; and a non-transitory computer-readable storage medium including instructions that, when executed by the processor circuitry, cause the processor circuitry to: classify, in real time, an application type of an application traffic stream based on one or more indicators received from one or more components of an edge device and associated with the application traffic stream; and assign a priority to the application traffic stream by modifying its packet headers, enabling a network module to dynamically prioritize the application traffic stream based on the classification.

Example 13. The component of example 12, wherein the application types comprise gaming, video streaming, audio streaming, downloading, audio conferencing, video conferencing, artificial intelligence chatbot applications, or productivity applications.

Example 14. The component of any of examples 12-13, wherein the instructions further cause the processor circuitry to: dynamically prioritize the application traffic stream to optimize for latency, throughput, or bandwidth.

Example 15. The component of any of examples 12-14, wherein the indicators comprise a networking indicator, a graphics indicator, an audio output indicator, an audio input indicator, or a hard drive activity indicator.

Example 16. The component of example 15, wherein the networking indicator is based on a size of application traffic stream packets, a ratio of upload to download traffic in the application traffic stream, frequency of the traffic stream packets, time gaps between application traffic stream packet transmissions or receipts, or length of the application traffic stream packets.

Example 17. The component of example 15, wherein the graphics indicator is based on a level of graphics processor unit (GPU) usage or frequency of image changes in the application traffic stream.

Example 18. The component of example 15, wherein the audio output indicator is based on whether an audio input is continuous or intermittent.

Example 19. The component of example 15, wherein the audio input indicator is based on whether an audio output is continuous or intermittent.

Example 20. The component of any of examples 12-19, wherein the instructions further cause the processor circuitry to: receive a set of prioritization levels that determine a prioritization of different application types; and assign a priority to the application traffic stream additionally based on the set of prioritization levels.

Example 21. An apparatus, comprising: a classifier means for classifying, in real time, an application type of an application traffic stream based on one or more indicators received from one or more components of an edge device and associated with the application traffic stream; and a quality-of-service (QoS) engine means for assigning a priority to the application traffic stream by modifying its packet headers, enabling a network module to dynamically prioritize the application traffic stream based on the classification.

Example 22. The apparatus of example 21, wherein the application types comprise gaming, video streaming, audio streaming, downloading, audio conferencing, video conferencing, artificial intelligence chatbot applications, or productivity applications.

Example 23. The apparatus of any of examples 21-22, wherein the QoS engine means is for dynamically prioritizing the application traffic stream to optimize for latency, throughput, or bandwidth.

Example 24. The apparatus of any of examples 21-23, wherein the indicators comprise a networking indicator, a graphics indicator, an audio output indicator, an audio input indicator, or a hard drive activity indicator.

Example 25. The apparatus of example 24, wherein the networking indicator is based on a size of application traffic stream packets, a ratio of upload to download traffic in the application traffic stream, frequency of the traffic stream packets, time gaps between application traffic stream packet transmissions or receipts, or length of the application traffic stream packets.

Example 26. The apparatus of example 24, wherein the graphics indicator is based on a level of graphics processor unit (GPU) usage or frequency of image changes in the application traffic stream.

Example 27. The apparatus of example 24, wherein the audio output indicator is based on whether an audio input is continuous or intermittent.

Example 28. The apparatus of example 24, wherein the audio input indicator is based on whether an audio output is continuous or intermittent.

Example 29. The apparatus of example 24, wherein the hard drive activity indicator is based on a volume of data storage activity or a data transfer pattern associated with the application traffic stream.

Example 30. The apparatus of any of examples 21-29, wherein the QoS engine means is further for: receiving a set of prioritization levels that determine a prioritization of different application types; and assigning a priority to the application traffic stream additionally based on the set of prioritization levels.

Example 31. The apparatus of any of examples 21-30, wherein the classifier means is further for classifying the application type on historical application traffic stream patterns.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

1. An apparatus, comprising:
a classifier means for classifying, in real time, an application type of an application traffic stream based on one or more indicators received from one or more components of an edge device and associated with the application traffic stream; and
a quality-of-service (QoS) engine means for assigning a priority to the application traffic stream by modifying its packet headers, enabling a network module to dynamically prioritize the application traffic stream based on the classification.

2. The apparatus of claim 1, wherein the application types comprise gaming, video streaming, audio streaming, downloading, audio conferencing, video conferencing, artificial intelligence chatbot applications, or productivity applications.

3. The apparatus of any of claims 1-2, wherein the QoS engine means is for dynamically prioritizing the application traffic stream to optimize for latency, throughput, or bandwidth.

4. The apparatus of any of claims 1-3, wherein the indicators comprise a networking indicator, a graphics indicator, an audio output indicator, an audio input indicator, or a hard drive activity indicator.

5. The apparatus of claim 4, wherein the networking indicator is based on a size of application traffic stream packets, a ratio of upload to download traffic in the application traffic stream, frequency of the traffic stream packets, time gaps between application traffic stream packet transmissions or receipts, or length of the application traffic stream packets.

6. The apparatus of claim 4, wherein the graphics indicator is based on a level of graphics processor unit (GPU) usage or frequency of image changes in the application traffic stream.

7. The apparatus of claim 4, wherein the audio output indicator is based on whether an audio input is continuous or intermittent.

8. The apparatus of claim 4, wherein the audio input indicator is based on whether an audio output is continuous or intermittent.

9. The apparatus of claim 4, wherein the hard drive activity indicator is based on a volume of data storage activity or a data transfer pattern associated with the application traffic stream.

10. The apparatus of any of claims 1-9, wherein the QoS engine means is further for:
receiving a set of prioritization levels that determine a prioritization of different application types; and
assigning a priority to the application traffic stream additionally based on the set of prioritization levels.

11. The apparatus of any of claims 1-12, wherein the classifier means is further for classifying the application type on historical application traffic stream patterns.

12. A component of a system, comprising:
processor means; and a
non-transitory computer-readable storage medium including instructions that, when executed by the processor means, cause the processor means to:
classify, in real time, an application type of an application traffic stream based on one or more indicators received from one or more components of an edge device and associated with the application traffic stream; and
assign a priority to the application traffic stream by modifying its packet headers, enabling a network module to dynamically prioritize the application traffic stream based on the classification.

13. The component of claim 12, wherein the application types comprise gaming, video streaming, audio streaming, downloading, audio conferencing, video conferencing, artificial intelligence chatbot applications, or productivity applications.

14. The component of any of claims 12-13, wherein the instructions further cause the processor means to:
dynamically prioritize the application traffic stream to optimize for latency, throughput, or bandwidth.

15. The component of any of claims 12-14, wherein the indicators comprise a networking indicator, a graphics indicator, an audio output indicator, an audio input indicator, or a hard drive activity indicator.
